# EUROPÄISCHE PATENTSCHRIFT

(11) **EP 1 754 919 B1**
(45) Veröffentlichungstag und Bekanntmachung des Hinweises auf die Patenterteilung: **15.10.2008**
(21) Anmeldenummer: 05018110.6
(22) Anmeldetag: 19.08.2005
(51) Int. Cl.: F16L 9/12, F16L 11/04, F16L 11/12, B32B 1/08, B32B 27/34

(54) **Rohr mit doppelter Sperrschicht**
Pipe with double barrier layer
Tuyau avec couche barrière double

(43) Veröffentlichungstag der Anmeldung: 21.02.2007
(73) Patentinhaber: VERITAS AG, 63571 Gelnhausen (DE)
(72) Erfinder: Seyler, Andreas, 63584 Gründau (DE)
(74) Vertreter: Grünecker, Kinkeldey, Stockmair & Schwanhäusser Anwaltssozietät

(56) Entgegenhaltungen:
- EP-A- 0 673 762
- EP-A- 0 836 042
- EP-A- 1 108 591
- EP-A- 1 162 061
- EP-A- 1 188 552
- EP-A- 1 559 537
- WO-A-99/57473
- DE-A1- 4 337 491
- US-A- 5 756 199
- US-A1- 2004 069 361

## Beschreibung

Die vorliegende Erfindung betrifft einen Hohlkörper, insbesondere Rohr oder Schlauch, gemäß dem Oberbegriff des Anspruches 1.

Ein derartiger Hohlkörper ist aus der EP 1 559 537 A1 bekannt. Ähnliche Hohlkörper sind aus US 2004/069361 A1, EP-A-0 673 762 oder US-A-5 756 199 bekannt.

Verschiedene Arten von Rohren und Schläuchen sind zum Einsatz im Zusammenhang mit der Beförderung der oben genannten Medien bekannt. Üblicherweise umfassen derartige Rohre bzw. Schläuche unterschiedliche funktionelle Schichten, die beispielsweise eine Sperrwirkung entfalten sollen (Sperrschicht) oder aber die empfindliche Sperrschicht vor äußeren Einflüssen schützen sollten (Schutzschicht). Daneben können noch eine ganze Reihe an weiteren Schichten vorgesehen sein, beispielsweise farbige Markierungsschichten, Stützschichten zur Verbesserung der mechanischen Eigenschaften usw..

Die bekannten Rohr- bzw. Schlauchsysteme sind dabei allerdings nicht in jeder Hinsicht zufriedenstellend, insbesondere da nicht immer eine ausreichende Sperrwirkung gegenüber allen oben genannten Medien sicher zustellen ist, so dass häufig für die jeweilige Anwendung ein neues Rohr- bzw. Schlauchsystem eingesetzt werden muss.

Aufgabe der vorliegenden Erfindung ist es also einen Hohlkörper zur Verfügung zu stellen, der die oben genannten Probleme überwindet.

Diese Aufgabe wird erfindungsgemäß durch einen Schlauch in Übereinstimmung mit Anspruch 1 gelöst. Bevorzugte Ausführungsformen sind in den Unteransprüchen angegeben.

Der erfindungsgemäße Schlauch zeichnet sich dadurch aus, dass er innen sowie außen jeweils eine Schicht aus einem thermoplastischen Material aufweist. Dabei können die üblichen thermoplastischen Materialien Verwendung finden, wie Polyolefine, Polyamide oder Polyester. Erfindungsgemäß bevorzugt sind dabei Polyamide, wie PA6, PA66, PA10, PA11, PA12, PA610, PA612 usw.. Erfindungsgemäß ist es dabei bevorzugt, wenn das Material der Innenschicht chemisch verschieden zum Material der Außenschicht ist. Erfindungsgemäß bevorzugte Polyamidmaterialien für die Innenschicht sowie die Außenschicht sind PA6, PA66, PA61 0, PA12 und PA612. Besonders bevorzugt sind dabei PA6, PA12 und PA612, wobei PA6 insbesondere bevorzugt für die Innenschicht eingesetzt wird, während PA12 bzw. PA612 bevorzugt für die Außenschicht eingesetzt wird.

Die Innen- sowie die Außenschicht weisen bevorzugt eine Schichtdicke von etwa 0,3 bis 4 mm auf, bevorzugt 0,3 bis 2,5 mm, insbesondere bevorzugt 0,3 bis 2,2 mm, wie beispielsweise 0,3 bis 1,7 mm oder 0,4 bis 1,2 mm.

Die erfindungsgemäße doppelte Sperrschicht umfasst zwei Schichten aus einem typischen Sperrschichtmaterial, wobei die beiden Schichten chemisch voneinander verschieden sind. Erfindungsgemäß geeignete Sperrschichtmaterialien sind insbesondere EVOH (Ethylen Vinyl Alkohol), PTFE (Polytetrafluorethylen), PFA (Perfluoralkoxy), ETFE (Ethylen-Tetrafluorethylen), FEP (Perfluorethylenpropylen), PVDF (Polyvinylidenfluorid), THV (Tetrafluorethylen-Hexafluorpropylen-Vinyliden-Fluorid), CTFE (Chlortrifluorethylen), ECTFE (Ethylen-Chlortrifluorethylen) und FPM (Fluor-Polymer). Erfindungsgemäß bevorzugt ist es, wenn mindestens eine der beiden Sperrschichten ein fluorhaltiges Material umfasst, bevorzugt THV oder PVDF, insbesondere bevorzugt PVDF. Die weitere Sperrschicht umfasst ein chemisch von der ersten Sperrschicht verschiedenes fluorhaltiges Material, wie die oben angeführten, oder EVOH. Es ist bevorzugt, wenn eine der beiden Sperrschichten EVOH umfasst. Eine besonders bevorzugte Kombination für die doppelte Sperrschicht ist somit eine Sperrschicht aus EVOH, kombiniert mit einer Sperrschicht aus PVDF oder THV, insbesondere PVDF. Die besonders bevorzugte Kombination umfasst also eine Sperrschicht aus EVOH, kombiniert mit einer Sperrschicht aus PVDF. Die Reihenfolge dieser beiden Sperrschichten (von innen nach außen) kann im Prinzip beliebig gewählt werden, bevorzugt ist aber eine weiter innen liegende EVOH-Sperrschicht, kombiniert mit einer (weiter außen) darauf folgenden fluorhaltigen Sperrschicht, insbesondere PVDF.

Die erfindungsgemäßen Sperrschichten weisen bevorzugt Dicken von 0,003 bis 0,2 mm auf, so dass sich für die doppelte Sperrschicht eine bevorzugte Gesamtdicke von 0,004 bis 0,4 mm ergibt. Bevorzugt beträgt die Dicke jeder einzelnen Sperrschicht etwa 0,004 bis 0,1 mm, so dass sich eine Gesamtdicke der doppelten Sperrschicht von 0,008 bis 0,2 mm ergibt.

Durch die erfindungsgemäße Kombination der beiden Sperrschichten zu einer doppelten Sperrschicht ist es möglich die Sperrwirkung gegenüber einer Vielzahl an Medien zu maximieren, bei gleichzeitig minimalem Materialeinsatz. Insbesondere bei den bevorzugten Kombinationen für die Sperrschichten, d. h. eine EVOH-Sperrschicht kombiniert mit einer fluorhaltigen Sperrschicht, insbesondere PVDF, kann eine ausgezeichnete kombinierte Sperrwirkung erhalten werden. Während EVOH insbesondere sehr gut gegen reine Kohlenwasserstoffe eine Sperrwirkung entwickelt, zeigt das fluorhaltige Material, insbesondere PVDF eine sehr gute Sperrwirkung gegen sauerstoffhaltige Verbindungen, d. h. Kohlenwasserstoffderivate, die durch Sauerstoff enthaltende funktionelle Gruppen gekennzeichnet sind (wie Alkohole). Somit eignen sich die erfindungsgemäßen Rohre bzw. Schläuche sowohl zum Transport einer Mischung aus reinen Kohlenwasserstoffen z.B. Diesel und Derivaten davon, als auch zum aufeinander folgenden Transport unterschiedlicher Materialien z.B. Ottokraftstoff (wie oben angeführt, z. B. zunächst reine Kohlenwasserstoffe, anschließend sauerstoffhaltige Verbindungen). Erfindungsgemäß wird eine ausgezeichnete Sperrwirkung sichergestellt, ohne dass beispielsweise Transportleitungen ausgetauscht werden müssen.

Der erfindungsgemäße Schlauch bzw. das erfindungsgemäße Rohr umfasst lediglich die vier oben diskutierten wesentlichen Schichten (Innenschicht, Außenschicht, zwei Sperrschichten)..

Ein erfindungsgemäßer Vorteil ist weiterhin, dass zwischen den konstituierenden Schichten des erfindungsgemäßen Hohlkörpers keine Haftschichten notwendig sind, um eine ausreichende Haftung zu erhalten. Erfindungsgemäß wird auf eine direkte Anbindung zurückgegriffen (Direct Bonding), wobei eine leichte Additivierung und/oder direkte chemische Modifizierung des Sperrschichtmaterials vorgesehen ist. So ist es erfindungsgemäß beispielsweise vorteilhaft, wenn die fluorhaltigen Sperrschichtmaterialien mit geeigneten funktionellen Gruppen ausgerüstet sind, beispielsweise durch Pfropfung, um so eine ausreichende Haftung an Polyamid sicherzustellen. Geeignete funktionelle Gruppen sind beispielsweise Säureanhydridgruppen oder Derivate davon, insbesondere Maleinsäureanhydridgruppen. So haftet beispielsweise mit Maleinsäureanhydrid gepfropftes PVDF besser an Polyamiden, verglichen mit reinem PVDF. Diese beispielhafte Ausführung gilt in analoger Weise für die weiteren in der vorliegenden Anmeldung aufgezählten fluorhaltigen Sperrschichtmaterialien. EVOH dagegen haftet direkt ohne Additiv sowohl an Polyamid als auch an den erfindungsgemäß zu verwendenden fluorhaltigen Materialien, wie insbesondere PVDF und modifiziertes PVDF.

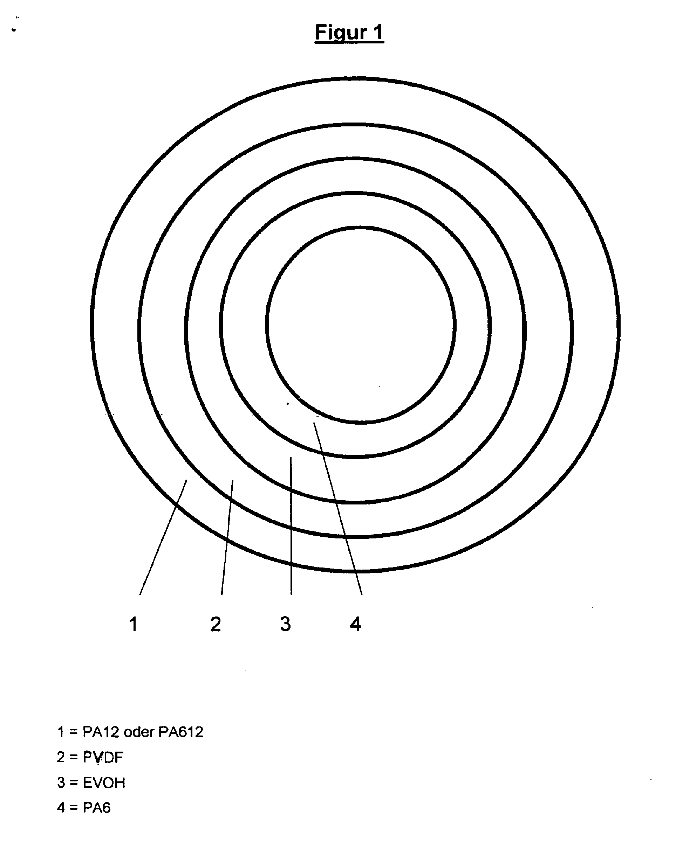

Erfindungsgemäß ergibt sich somit eine bevorzugte Ausführungsform, wie sie in Figur 1 dargestellt ist. In Figur 1 ist ein Schlauch bzw. ein Rohr im Querschnitt gezeigt, mit vier konstituierenden Schichten, die wie folgt ausgewählt sind. Außen (1) ist eine Schicht aus PA12 oder PA612 vorgesehen. Darauf folgt eine Schicht (2) aus PVDF, bevorzugt PVDF gepfropft mit Maleinsäureanhydrid (zur Verbesserung der Haftung an das Polyamid). Anschließend folgt eine Schicht (3) aus EVOH, wobei zur Sicherstellung der Haftung weder ein Additiv noch eine chemische Modifizierung des Sperrschichtmaterials notwendig ist. Abschließend ist innen eine Schicht (4) aus Polyamid vorgesehen, bevorzugt PA6.

Der erfindungsgemäße Schlauch bzw. das erfindungsgemäße Rohr können in üblicher Art und Weise hergestellt werden, beispielsweise durch Extrusionsverfahren. Die Dimensionierung des Schlauches bzw. des Rohrs erfolgt dabei in Abhängigkeit vom gewünschten Einsatzzweck. Geeignete Innendurchmesser des umschlossenen Hohlraums sind dem Fachmann geläufig.

## Patentansprüche

1. Hohlkörper, insbesondere Rohr oder Schlauch, bestehend aus einer Innenschicht (4) und einer Außenschicht (1), jeweils aus einem thermoplastischen Material, und zwei Sperrschichten (2, 3), vorgesehen zwischen der Innenschicht (4) und der Außenschicht (1), **dadurch gekennzeichnet, dass** das Material zumindest einer der zwei Sperrschichten (2, 3) mit Additiven versetzt und/oder chemisch modifiziert ist, um unmittelbar an der Innenschicht (4) oder Außenschicht (1) zu haften.

2. Hohlkörper nach Anspruch 1, wobei das Material der beiden Sperrschichten (2, 3) chemisch verschieden ist.

3. Hohlkörper nach Anspruch 1 oder 2, wobei das thermoplastische Material der Innenschicht (4) und der Außenschicht (1) chemisch voneinander verschieden ist.

4. Hohlkörper nach Anspruch 1, 2 oder 3, wobei die Dicke der Innenschicht (4) sowie die Dicke der Außenschicht (1) jeweils 0,3 bis 4 mm beträgt.

5. Hohlkörper nach Anspruch 1, 2, 3 oder 4, wobei die Dicke jeder Sperrschicht (2, 3) von 0,002 bis 0,2 mm beträgt.

6. Hohlkörper nach Anspruch 1, 2, 3, 4 oder 5, wobei das thermoplastische Material für die Innenschicht (4) und die Außenschicht (1) ausgewählt ist aus der Gruppe der Polyamide.

7. Hohlkörper nach Anspruch 6, wobei das Polyamidmaterial ausgewählt ist aus der Gruppe bestehend aus Polyamid 6, Polyamid 66, Polyamid 12 und Polyamid 612.

8. Hohlkörper nach einem der vorstehenden Ansprüche, wobei das Material für die Sperrschicht (2, 3) ausgewählt ist unter THV, PVDF, CTFE, ETFE, ECTFE, FPM und EVOH.

9. Hohlkörper nach Anspruch 8, wobei die eine Sperrschicht (2) PVDF umfasst und die andere Sperrschicht (3) EVOH umfasst.

## Claims

1. Hollow body, in particular a tube or pipe, comprising an inner layer (4) and an outer layer (1), each made from a thermoplastic material, and two barrier layers (2, 3) provided between the inner layer (4) and the outer layer (1), **characterized in that** the material of at least one of said two barrier layers (2, 3) is mixed with additives and/or chemically modified to adhere directly to the inner layer (4) or outer layer (1).

2. Hollow body according to claim 1, wherein the materials of the two barrier layers (2, 3) are chemically different.

3. Hollow body according to claim 1 or 2, wherein the thermoplastic materials of the inner layer (4) and the outer layer (1) are chemically different from each other.

4. Hollow body according to claim 1, 2 or 3, wherein the thickness of the inner layer (4) and the thickness of the outer layer (1) are each 0.3 to 4 mm.

5. Hollow body according to claim 1, 2, 3 or 4, wherein the thickness of each barrier layer (2, 3) is from 0.002 to 0.2 mm.

6. Hollow body according to claim 1, 2, 3, 4 or 5, wherein the thermoplastic material for the inner layer (4) and the outer layer (1) is selected from the group consisting of polyamides.

7. Hollow body according to claim 6, wherein the polyamide material is selected from the group consisting of polyamide 6, polyamide 66, polyamide 12 and polyamide 612.

8. Hollow body according to any one of the preceding claims, wherein the material for the barrier layer (2, 3) is selected from THV, PVDF, CTFE, ETFE, ECTFE, FPM, and EVOH.

9. Hollow body according to claim 8, wherein the one barrier layer (2) comprises PVDF and the other barrier layer (3) comprises EVOH.

## Revendications

1. Corps creux, en particulier tube ou tuyau, composé d'une couche intérieure (4) et d'une couche extérieure (1) toutes les deux en matière thermoplastique, et de deux couches barrières (2, 3) prévues entre la couche intérieure (4) et la couche extérieure (1),
**caractérisé en ce que** la matière de l'une au moins des deux couches barrières (2, 3) est additionnée d'additifs et/ou est modifiée chimiquement afin d'adhérer directement à la couche intérieure (4) ou à la couche extérieure (1).

2. Corps creux selon la revendication 1, pour lequel les matières des deux couches barrières (2, 3) sont chimiquement différentes.

3. Corps creux selon la revendication 1 ou 2, pour lequel les matières thermoplastiques de la couche intérieure (4) et de la couche extérieure (1) sont chimiquement différentes.

4. Corps creux selon la revendication 1, 2 ou 3, pour lequel l'épaisseur de la couche intérieure (4) et l'épaisseur de la couche extérieure (1) sont de 0,3 à 4 mm.

5. Corps creux selon la revendication 1, 2, 3 ou 4, pour lequel l'épaisseur de chaque couche barrière (2, 3) est de 0,002 à 0,2 mm.

6. Corps creux selon la revendication 1, 2, 3, 4 ou 5, pour lequel la matière thermoplastique pour la couche intérieure (4) et pour la couche extérieure (1) est choisie dans le groupe des polyamides.

7. Corps creux selon la revendication 6, pour lequel la matière polyamide est choisie dans le groupe composée du polyamide 6, du polyamide 66, du polyamide 12 et du polyamide 612.

8. Corps creux selon l'une des revendications précédentes, pour lequel la matière pour la couche barrière (2, 3) est choisie parmi THV, PVDF, CTFE, ETFE, ECTFE, FPM et EVOH.

9. Corps creux selon la revendication 8, pour lequel une première couche barrière (2) comprend du PVDF et la seconde couche barrière (3) EVOH.
